# EUROPEAN PATENT APPLICATION

(11) **EP 0 922 598 A1**
(43) Date of publication of application: **16.06.1999**
(21) Application number: 98309821.1
(22) Date of filing: 01.12.1998
(51) Int. Cl.: B60J 10/00

(54) **Seal and/or trim components**

(30) Priority: 09.12.1997 GB 9726066
(71) Applicant: THE STANDARD PRODUCTS COMPANY, Cleveland Ohio 44102 (US)
(72) Inventor: Keys, James Frederick, Saint Neots, Cambridgeshire PE19 3AB (GB); Bickley, Alan Charles, Huntingdon, Cambridgeshire PE18 8XR (GB)
(74) Representative: Jones, Michael Raymond

(57) **Abstract**

There is disclosed a seal and/or trim component comprising an extruded polymeric material supported by a metallic core, wherein the metallic core is in the form of a plurality of separate lengths (12) thereof, with adjacent lengths (12) being separated from each other. The component can be cut between adjacent lengths so as to leave no metallic core exposed at the cut face.

## Description

This invention relates to seal and/or trim components, such as seal and/or trim components for automobiles.

Many automotive seal and/or trim components consist, at least in part, of an extruded elastomeric or plastics material supported by a metallic core.

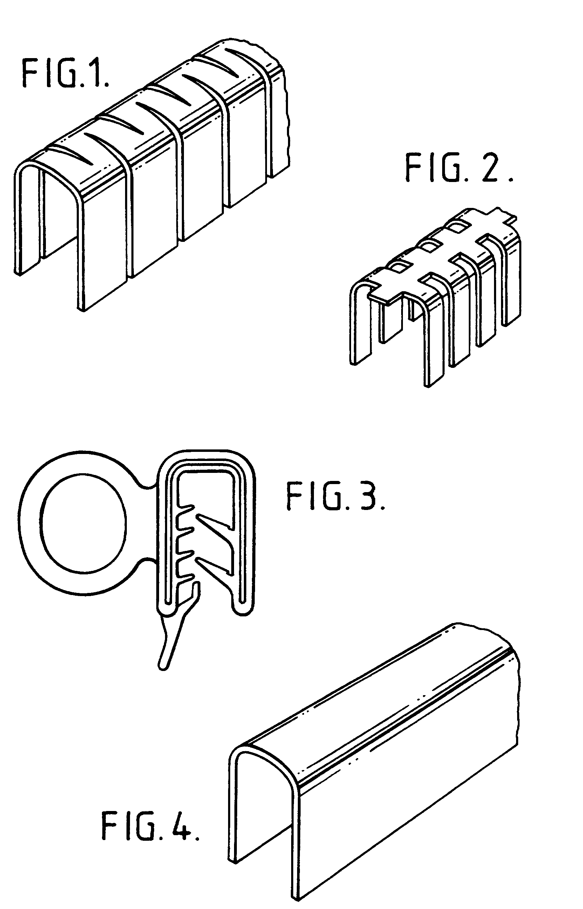

The core can be made of a range of metals including steel, aluminium and stainless steel, and can be rigid or flexible in nature. The flexibility is created from the geometry of the core itself, and/or by cutting the metal locally producing a weakened core, as shown in Figures 1 and 2 of the drawings. The metallic core is fed through an extrusion head in continuous long lengths and the polymeric material extruded around it. The metal is supplied to the extrusion line from a drum or coil in lengths of, typically, 1000 to 10000 metres. Due to the nature of the process, it can be advantageous to run extrusion lines for many hours and it can be desirable to join the long lengths of core material together. This is usually achieved by welding.

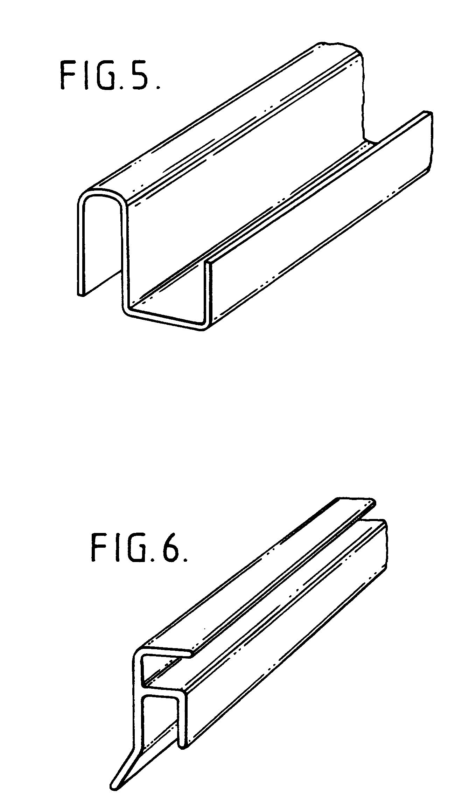

At the far end of the extrusion line, the extrudate is either coiled for subsequent operations or cut to length on line. In either instance the extrusion is cut at some point and there can follow moulding or jointing operations. If the cut end of the extrudate is viewed, it can be seen that the cut surface is composed of the metallic core and the elastomeric or plastics material, as shown in Figure 3. This has several disadvantages, including:
(i) The life of the cutting blade or saw is reduced as it is cutting metal as well as the elastomeric or plastics material.
(ii) The surface of the cut available for bonding (in a moulding or joining operation) is reduced by the cross sectional area of the metal, unless a metal or polymer bonding agent is added, which is an additional operation and cost.
(iii) There is a risk of distorting the metallic core during the cutting operation, which can make subsequent joining more difficult. Additionally, if burrs are created they need to be removed or the resultant joint is prone to failure.
(iv) There is the risk of corrosion of the core. Therefore, an end treatment or moulding operation is necessary.

According to the present invention, there is provided a seal and/or trim component comprising an extruded polymeric material, e.g. an elastomeric or plastics material, supported by a metallic core, wherein the metallic core is in the form of a plurality of separate lengths thereof, with adjacent lengths being separated from each other, whereby the component can be cut between adjacent lengths so as to leave no metallic core exposed at the cut face.

In one preferred embodiment, adjacent lengths are joined by an elongate non-metallic flexible member that spans the gap between adjacent lengths. Preferably, the flexible member is tape.

In another preferred embodiment, the separate lengths of the metallic core have been formed by breaking a continuous length of the metallic core at weakened portions thereof.

The present invention also provides a first method of making a seal and/or trim component of the invention, which comprises:
cutting metallic strip to form a plurality of separate lengths thereof;
joining the separate lengths one to another by an elongate non-metallic flexible material;
shaping the joined separate lengths to the desired shape of the metallic core; and
feeding the joined lengths of the metallic core through an extruder so as to extrude a polymeric material over the joined separate lengths of the metallic core and over the elongate non-metallic flexible material.

The present invention also provides a second method of making a seal and/or trim component of the invention, which comprises:
notching metallic strip to form a notched metallic strip;
shaping the notched metallic strip to the desired shape of the metallic core; and
feeding a notched metallic core through an extruder so as to extrude a polymeric material over the notched metallic core, while causing the notched metallic core to break at the notches thereof.

Preferably, in the case of this second method, an elongate non-metallic flexible material is fed through the extruder, with the notched metallic core.

The present invention also provides a third method of making a seal and/or trim component of the invention, which comprises:
joining separate lengths of metallic core one to another by an elongate non-metallic flexible material; and
feeding the joined lengths of metallic core through an extruder so as to extrude a polymeric material over the joined separate lengths of the metallic core and over the elongate non-metallic flexible material.

Preferably, in the case of this third method, the lengths of metallic core are notched prior to being joined one to another.

The present invention also provides a fourth method of making a seal and/or trim component of the invention, which comprises:
feeding separate lengths of the metallic core through an extruder so that a polymeric material is extruded over the separate lengths while the separate lengths are positioned so as to be spaced apart one from another.

Preferably, in the case of this fourth method, an elongate non-metallic flexible material is fed through the extruder, with the separate lengths of the metallic core.

The present invention allows there to be produced an extrudate that has metallic carrier reinforcement but also has the potential of having no metal exposed at the cut face. This is achieved by having an intermittent core material of pre-determined length and with pre-determined gaps between the lengths of core material.

At the end of the extrusion line the gap can be detected by, for example, an inductive sensor and a cut-to-length machine set to cut in the gap between the metallic cores. This produces a cut surface consisting of the polymeric material with no exposed metal.

If one is producing a component that is simply cut to length, such as some automotive inner waist seals, then one produces a component with no exposed metal carrier. As no metal is exposed, the risk of corrosion affecting the core is drastically reduced and no end treatment (e.g. painting or moulding) is required. Alternatively, if the cut ends are to be moulded or jointed, then one is able to produce stronger joints with lower stress concentrations, when external loads are applied, than would be the case if the cuts have exposed metal.

Reference is made herein, by way of example, to the drawings in which:
Figure 1 and 2 illustrate metallic cores of seal and/or trim components, as noted above;
Figure 3 illustrates a cut seal and/or trim component, as noted above;
Figures 4 and 5 illustrate metallic cores of seal and/or trim components;
Figure 6 illustrates a metallic extrusion for use as a core of a seal and/or trim component;
Figures 7, 10 and 12 illustrate several methods of making seal and/or trim components of the invention; and
Figures 8, 9, 11, 13, 14 and 15 illustrate features of the core arrangements of seal and/or trim components of the invention.

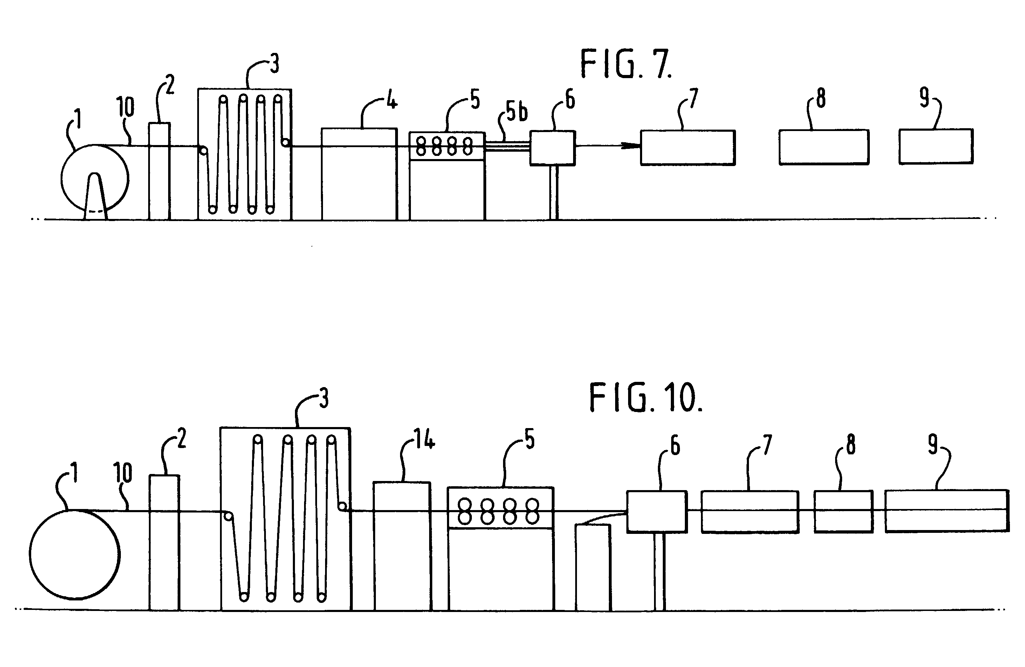

Example of the core that can be used according to the invention are:
(a) flexible cores formed from a flat metal strip by cutting or perforating a roll formed to shape, for example as shown in Figures 1 and 2;
(b) rigid cores formed from a flat metal strip that has been roll formed to shape, for example as shown in Figures 4 and 5;
(c) metallic extrusions (such as aluminium extrusions), for example as shown in Figure 6; and
(d) other fabrications such as spiral wound flattened wire which can be used to import strength, whilst maintaining flexibility, to pipes or cable sheaths.

The cores may have bonding agent applied to their whole surface, or to part of this surface, or in some instances not at all.

An example of a first method of making a component of the invention is shown in Figure 7.

Metallic strip 10 is supplied to an extrusion line from a drum 1. The strip is fed through a welder 2 and an accumulator 3. Examples of such equipment are found on many extrusion lines. The welder 2 is used to join together long lengths of strip, and the accumulator 3 generates the time for the operator to make a welded joint without stopping the line.

The strip 10 is then cut to a pre-determined length in a cutting and taping unit 4. The length may be measured by any of several means, such as a length encoder or (for a core such as shown in Figures 1 and 2) a spragg counting system.

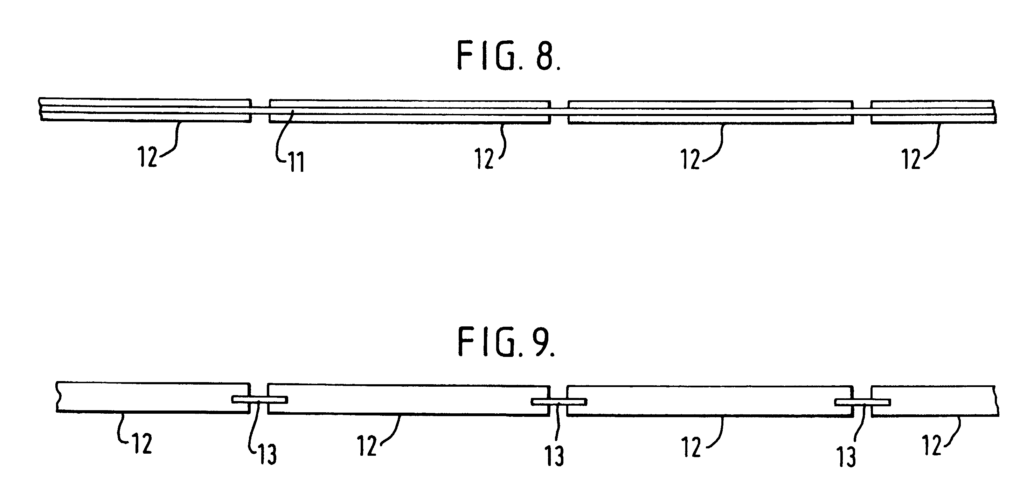

The cut lengths are jointed in the cutting and taping unit 4, using a tape which must be capable of withstanding the tension exerted during extrusion (to be described later). The tape may be self-adhesive tape, or an adhesive may be applied to the tape and/or core. This strength may be derived from cord or fibre within the body of the tape. The tape may be continuous throughout the lengths as shown in Figure 8 or may be locally placed to bridge the gap between the adjacent lengths as shown in Figure 9. Thus, Figure 8 shows a continuous tape 11 joining discrete lengths 12 of metallic strip, and Figure 9 shows short lengths 13 of tape joining discrete lengths 12 of metallic strip.

The gap may typically be 5mm. This is easily detectable at the end of the extrusion line and allows a cut-to-length machine to cut between the embedded metal strips.

The strip 10 may then be formed to a core by roll forming in a roll former 5 (or by other means), to produce shapes such as shown in Figures 1 and 2, and then passed into the back of the extruder head of an extruder 6. It is recommended that the formed core be guided at the transition into the extruder head. For some cores it may be advantageous to employ powered rollers at the back of the head to push the core into the head.

In the head, polymeric material is extruded onto the metallic core. The shape of the resultant profile is determined by the extrusion die arrangement.

After extrusion the material is cooled (for plastic materials) in a cooling tank 8 and then cut to length in a cut-to-length machine 9. Alternatively, for cross-linkable materials, the material is passed through an oven 7 to heat the polymer to allow crosslinking and then cooled in the tank 8 and cut to length in the machine 9. The cut-to-length machine is equipped with a detection system and is arranged so that the cut is made through the material in the gap between the discrete lengths of the core.

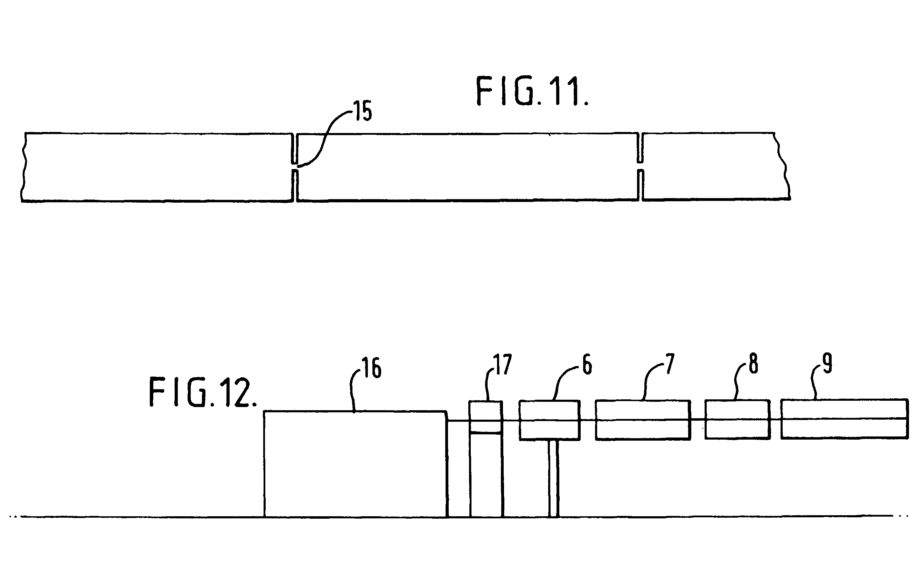

An example of a second method of the invention is outlined in Figure 10. The process is the same as previously described with reference to Figure 9, up to and including the accumulator 3. Then, the strip 10 is not cut but notched in a notch machine 14, as shown in Figure 11, to create weak links 15 in the core. These links 15 are designed to be strong enough to survive through the roll former 5 but to break inside the extrusion head of the extruder 6. To provide some tensile strength to the extrusion as a whole, one or more cords or tapes can be inserted into the back of the head with the strip. The cord then takes the tensile load during the extrusion process.

The processing after the extruder head is the same as already described with reference to Figure 7.

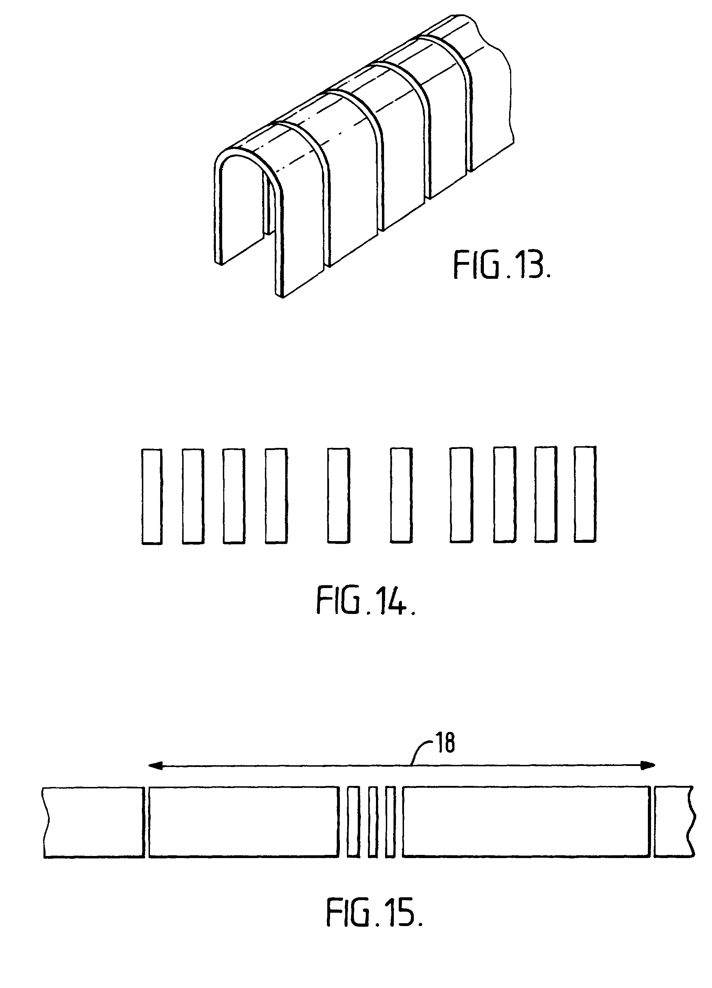

An example of a third method of the invention is shown in Figure 12. In this case pre-cut and possibly pre-notched lengths of core are fed by a feed system 16 from a storage area to a tape applicator unit 17. The tape is applied so as to create a gap between the discrete lengths of core and to produce a continuous feed to the extruder head of the extruder 6. The processing after the head is the same as already described with reference to Figure 7.

In the method described with reference to Figure 12, the aluminium feed system 16 may include a pusher which pushes the core into the head until such time as the extrudate flow carries the core along. In this instance the tape applicator unit 17 can be replaced by a device for inserting a string or cord into the extruder head such that the string or cord enters and is encapsulated by the polymer flow.

A further special case is the situation where the discrete lengths of metallic core are short (typically 4mm) and a component length would consist of many such lengths of core. As an example an automotive doorseal may include 800 such discrete core lengths. In such a case, the spraggs, or short core lengths, can be held together by tape or can be fed individually into the polymer stream in the extrusion head, with a gap between adjacent spraggs. Such a system may be as shown in Figure 7. In the cutting machine 4, the core is cut in a similar manner to that shown in Figure 11, but the spacing between the cuts is greatly reduced. The design of cut is such that the strength of the resulting core is sufficient to survive intact through the roll forming operation until the last pass of rolls. The last pass will be designed to stretch the core sufficiently to break the metal between the spraggs, so creating a series of short discrete spraggs such as shown in Figure 13.

As shown in Figure 7, an exit guide 5b may be positioned between the roll former 5 and the extruder 6. This exit guide 5b can be replaced by a powered pusher and guide so that the spraggs would be fed into the polymer stream in the extrusion head at a controlled rate. The guide needs to be configured so that the spraggs do not ride over each other, but proceed in an ordered procession into the head.

The tensile strength of the extrusion for processing purposes can be provided by cord or tape if needed.

The spacing between the spraggs in the polymer flow may be varied by adjustment of the pusher speed. In this case, there is the option of varying the pitch of the spraggs within one length of extrusion, such as shown in Figure 14, so that the extrudate can have differing mechanical properties along its length.

Also, this method has the additional option of varying the individual core lengths in an extrusion by programming the cutting machine. Thus, patterns such as shown, within the repeat length shown by arrow 18, in Figure 15 can be achieved, which would also produce extrudate of pre-determined variable properties along the length.

## Claims

1. A seal and/or trim component comprising an extruded polymeric material supported by a metallic core, wherein the metallic core is in the form of a plurality of separate lengths thereof, with adjacent lengths being separated from each other, whereby the component can be cut between adjacent lengths so as to leave no metallic core exposed at the cut face.

2. A component as claimed in claim 1, wherein adjacent lengths are joined by an elongate non-metallic flexible material that spans the gap between adjacent lengths.

3. A component as claimed in claim 2, wherein the flexible material is tape, cord or string.

4. A component as claimed in claim 1, the separate lengths of the metallic core having been formed by breaking a continuous length of the metallic core, within the component, at weakened portions thereof.

5. A method of making a seal and/or trim component as claimed in claim 1, which comprises:
cutting metallic strip to form a plurality of separate lengths thereof;
joining the separate lengths one to another by an elongate non-metallic flexible material;
shaping the joined separate lengths to the desired shape of the metallic core; and
feeding the joined lengths of the metallic core through an extruder so as to extrude a polymeric material over the joined separate lengths of the metallic core and over the elongate non-metallic flexible material.

6. A method according to claim 5, wherein the flexible material is tape, cord or string.

7. A method of making a seal/or trim component as claimed in claim 1, which comprises:
notching metallic strip to form a notched metallic strip;
shaping the notched metallic strip to the desired shape of the metallic core; and
feeding a notched metallic core through an extruder so as to extrude a polymeric material over the notched metallic core, while causing the notched metallic core to break at the notches thereof.

8. A method according to claim 7, wherein an elongate non-metallic flexible material is fed through the extruder, with the notched metallic core.

9. A method according to claim 8, wherein the flexible material is tape, cord or string.

10. A method of making a seal and/or trim component as claimed in claim 1, which comprises:
joining separate lengths of metallic core one to another by an elongate non-metallic flexible material; and
feeding the joined lengths of metallic core through an extruder so as to extrude a polymeric material over the joined separate lengths of the metallic core and over the elongate non-metallic flexible material.

11. A method according to claim 10, wherein the lengths of metallic core are notched prior to being joined one to another.

12. A method according to claim 10 or 11, wherein the flexible material is tape, cord or string.

13. A method of making a seal and/or trim component as claimed in claim 1, which comprises:
feeding separate lengths of the metallic core through an extruder so that a polymeric material is extruded over the separate lengths while the separate lengths are positioned so as to be spaced apart one from another.

14. A method according to claim 13, wherein an elongate non-metallic flexible material is fed through the extruder, with the separate lengths of the metallic core.

15. A method according to claim 13 or 14, wherein the flexible material is tape, cord or string.

16. A method of making a seal and/or trim component for an automobile, which comprises cutting a component as claimed in any of claims 1 to 4 between one or more adjacent lengths thereof.
